# EUROPEAN PATENT APPLICATION

(11) **EP 4 760 942 A1**
(43) Date of publication of application: **17.06.2026**
(21) Application number: 25790722.0
(22) Date of filing: 01.04.2025
(51) Int. Cl.: H01M 50/358, H01M 50/342, H01M 50/591, H01M 50/249, H01M 50/204

(54) **BATTERY MODULE, BATTERY PACK AND VEHICLE INCLUDING SAME**

(30) Priority: 19.04.2024 KR 20240052736
(71) Applicant: LG Energy Solution, Ltd., Seoul 07335 (KR)
(72) Inventor: PARK, Ju-Hun, Daejeon 34122 (KR); CHANG, Hyuk-Kyun, Daejeon 34122 (KR)
(74) Representative: Plasseraud IP
(86) International application number: PCT/KR2025/095152
(87) International publication number: WO 2025/221097

(57) **Abstract**

The present disclosure relates to a battery module including a cell stack including a plurality of battery cells, a module case configured to accommodate the cell stack, and a top cover disposed on top of the module case, wherein the top cover includes a plurality of venting areas configured to discharge venting gas.

## Description

### TECHNICAL FIELD

The present disclosure relates to a battery module, and a battery pack and a vehicle including the same.

This application is based on and claims priority from Korean Patent Application No. 10-2024-0052736, filed on April 19, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

Meanwhile, since the battery cells involve chemical reactions during charging and discharging, the performance thereof may deteriorate when used in a higher temperature environment than the appropriate temperature, and there is a constant possibility of unexpected ignition or explosion when the heat is not controlled at the appropriate temperature. Additionally, the battery module is structured to accommodate these battery cells intensively inside the module housing. Therefore, if a thermal event occurs in one battery cell, the discharged high-temperature gas and flame may be transferred to adjacent battery cells, causing a chain reaction of battery cell explosions, which is very dangerous.

Therefore, when thermal runaway occurs in the battery module, there is a need to develop a structure that may prevent heat accumulation inside the battery module by discharging the high-temperature gas or flame generated inside the battery module to the outside, and prevent the discharged gas or flame from flowing back into the battery module.

### DISCLOSURE

### Technical Problem

The present disclosure is directed to providing a battery module that may effectively prevent or delay the propagation of thermal runaway between cells by smoothly discharging the gas or flame generated inside the battery module to the outside of the battery module when thermal runaway occurs in the battery module.

Additionally, the present disclosure is directed to providing a battery module with improved safety and reliability by preventing the gas or flame discharged to the outside of the battery module from flowing back into the battery module when thermal runaway occurs in the battery module.

However, technical problems to be solved by the present disclosure are not limited to the above-described problems, and other problems not mentioned herein may be clearly understood by those skilled in the art from the following description of the present disclosure.

### Technical Solution

In order to solve the above problem, the present disclosure provides a battery module including a cell stack including a plurality of battery cells, a module case configured to accommodate the cell stack, and a top cover disposed on top of the module case, wherein the top cover includes a plurality of venting areas configured to discharge venting gas.

The plurality of battery cells may be disposed in a horizontal direction, and each venting area constituting the plurality of venting areas may be configured to cover one surface facing the upper direction of each battery cell constituting the plurality of battery cells.

The top cover may be configured such that the plurality of venting areas are closed in a normal state, and at least some of the plurality of venting areas are opened when venting gas flows into the top cover from the inside of the module case.

The plurality of battery cells may include at least one first battery cell and at least one second battery cell disposed adjacent to the at least one first battery cell, and the plurality of venting areas may include a first venting area formed at a position corresponding to the at least one first battery cell and a second venting area formed at a position corresponding to the at least one second battery cell.

When venting gas is discharged from the at least one first battery cell, only the first venting area may be configured to be opened.

The plurality of venting areas may be configured to be opened only in a direction toward the outside of the battery module.

The plurality of venting areas may include cutting lines configured to allow each of the plurality of top cover areas to be breakable.

The battery module may further include at least one support member disposed on top of the plurality of venting areas.

The module case may include a top plate that forms one surface facing the upper direction of the module case and has at least one venting hole through which venting gas discharged from the battery cell is discharged.

The size of the at least one venting hole may be smaller than the size of one of the plurality of venting areas.

The at least one venting hole may include a first venting hole and a second venting hole disposed side by side with the first venting hole, and the first venting hole and the second venting hole may be formed at positions corresponding to at least a portion of the first venting area.

The top cover may be coupled to the top plate.

Additionally, the present disclosure provides a battery pack including a battery module according to the present disclosure.

And, the present disclosure provides a vehicle including a battery pack according to the present disclosure.

### Advantageous Effects

According to one aspect of the present disclosure, when a battery cell is in an abnormal state, high-temperature gas or flame generated from the battery cell may be smoothly discharged to the outside of the battery module, thereby effectively preventing or delaying the propagation of thermal runaway between cells.

Additionally, according to another aspect of the present disclosure, when a battery cell is in an abnormal state, high-temperature gas or flame generated from the battery cell may be prevented from flowing back into the battery module, thereby ensuring the safety and reliability of the battery module.

Additionally, according to still another aspect of the present disclosure, an event caused by thermal runaway phenomenon in a battery pack including multiple battery modules or a device equipped with them, for example, fire or explosion may be prevented or delayed.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a perspective view of a cell stack according to an embodiment of the present disclosure.
FIG. 4 is perspective view showing a battery module excluding a top cover according to an embodiment of the present disclosure.
FIG. 5 is a plan view showing a top cover according to an embodiment of the present disclosure.
FIG. 6 is a perspective view showing a top cover according to an embodiment of the present disclosure.
FIG. 7 is a cross-sectional perspective view of a battery module according to an embodiment of the present disclosure.
FIG. 8 is a view for describing a top cover where at least one venting area is separated in the event of thermal runaway of a battery module according to an embodiment of the present disclosure.
FIG. 9 is a cross-sectional perspective view of a battery module according to an embodiment of the present disclosure.
FIG. 10 is a view for describing a top cover where at least one venting area is separated in the event of thermal runaway of a battery module according to an embodiment of the present disclosure.
FIG. 11 is a cross-sectional perspective view of a battery module according to an embodiment of the present disclosure.
FIG. 12 is a view for describing a top cover where at least one venting area is separated in the event of thermal runaway of a battery module according to an embodiment of the present disclosure.
FIG. 13 is a perspective view of a battery module further including a support member according to an embodiment of the present disclosure.
FIG. 14 is a schematic perspective view of a battery pack including a battery module according to an embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Meanwhile, terms indicating directions such as upper, lower, left, right, front, and back may be used in the present disclosure, but these terms are only for convenience of description, and it is obvious to those skilled in the art that the terms may vary depending on the position of a reference object or an observer.

For example, in the embodiment of the present disclosure, the X-axis direction illustrated in the drawings may mean the left-right direction, the Y-axis direction may mean the front-back direction perpendicular to the X-axis direction on the horizontal plane (X-Y plane), and the Z-axis direction may mean the upper-lower direction (vertical direction) perpendicular to both the X-axis direction and the Y-axis direction.

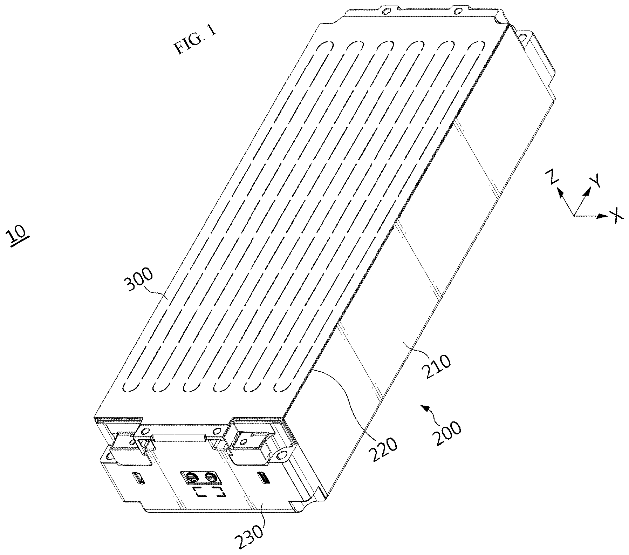

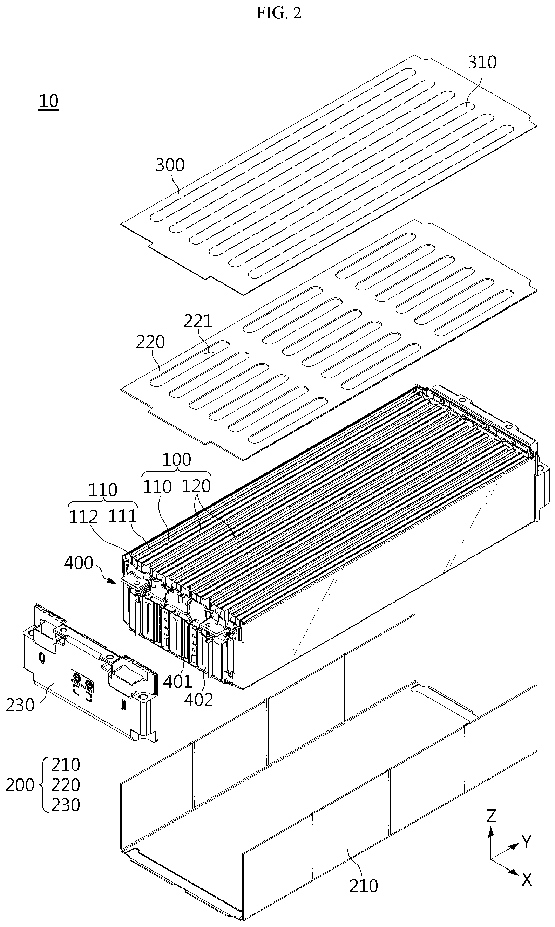

FIG. 1 is an overall perspective view of a battery module according to an embodiment of the present disclosure, and FIG. 2 is an exploded perspective view of a battery module according to an embodiment of the present disclosure.

Referring to FIGS. 1 and 2, a battery module 10 according to an embodiment of the present disclosure may include a cell stack 100, a module case 200, and a top cover 300.

The cell stack 100 may include a battery cell 110. The battery cells 110 may be provided in plurality.

The plurality of battery cells 110 may be, for example, pouch-type secondary batteries. The plurality of battery cells 110 may each be provided with an electrode lead 112. Specifically, the plurality of battery cells 110 may include an electrode assembly, a cell case 111 that accommodates the electrode assembly, and an electrode lead 112 that is connected to the electrode assembly and is withdrawn outward from the cell case 111 to function as an electrode terminal. The cell case 111 may accommodate the electrode assembly in a receiving portion, and an edge around the receiving portion may be thermally fused to form a sealing portion.

The electrode leads 112 may be provided in a pair, and the pair of electrode leads 112 may be withdrawn from both ends of the battery cell 110, that is, in the longitudinal direction (e.g., the Y-axis direction in FIG. 2). At this time, the pair of electrode leads 112 may be a positive electrode lead and a negative electrode lead. If necessary, the battery cell 110 may have a form in which the two electrode leads 112 are positioned only at one end in the longitudinal direction (e.g., the Y-axis direction in FIG. 2), for example, only at the end in the +Y-axis direction.

As illustrated in FIG. 2 and the like, the plurality of battery cells 110 may be disposed in parallel in a horizontal direction, for example, in the left-right direction (e.g., the X-axis direction in FIG. 2), while being erected in a vertical direction (e.g., the Z-axis direction in FIG. 2). At this time, each battery cell 110 may have its sealing portion facing the front-back direction (e.g., the Y-axis direction in FIG. 2) and the upper-lower direction (e.g., the Z-axis direction in FIG. 2), and its receiving portion facing the left-right direction (e.g., the X-axis direction in FIG. 2).

The present disclosure is not limited by the specific type or shape of this battery cell 110, and various battery cells 110 known at the time of filing of the present disclosure may be employed to form the cell stack 100 of the present disclosure. In the present embodiment, a pouch-type secondary battery with high energy density and easy stacking is targeted as shown in the drawings, but it is obvious that a cylindrical or prismatic secondary battery may be applied as the battery cell 110.

The cell stack 100 may further include a blocking member 120. The blocking member 120 may be provided between a plurality of battery cells 110. In particular, a plurality of blocking members 120 may be included in one cell stack 100. The blocking member 120 may be provided to be disposed for at least one battery cell 110. In the present embodiment, the blocking member 120 may be disposed for every two battery cells that constitute the plurality of battery cells 110. According to the above embodiment of the present disclosure, the plurality of battery cells 110 may be partitioned or separated to prevent gas or flame from being transferred to other blocking members 120 adjacent to the blocking member 120.

This blocking member 120 may be made of a material having excellent heat resistance and/or fire resistance, for example, a material such as silicone or aerogel. According to the above embodiment of the present disclosure, the blocking member 120 may contribute to the structural rigidity of the battery cells 110 by compressing the battery cells 110 in the event of swelling phenomenon of the battery cells 110.

Meanwhile, referring to FIGS. 1 and 2, the module case 200 may be configured to accommodate the cell stack 100. Specifically, the module case 200 may be configured to have an internal space formed therein and accommodate the cell stack 100 in the internal space.

Meanwhile, referring to FIG. 2, the module case 200 may include a case body 210. The case body 210 may be made of a metal material having rigidity and heat resistance to physically or chemically protect the accommodated battery cell 110. According to an embodiment, the case body 210 may be provided as a U-frame. When the case body 210 is provided as a U-frame, it may be provided to cover both side surfaces and the lower surface of the cell stack 100. For example, the case body 210 may include a left plate and a right plate that cover one surface facing the left direction (e.g., the -X-axis direction in FIG. 2) and one surface facing the right direction (e.g., the +X-axis direction in FIG. 2) of the cell stack 100, and a lower plate that covers one surface facing the lower direction (e.g., the -Z-axis direction in FIG. 2) of the cell stack 100. And, the left plate, the right plate, and the lower plate may be configured in an integrated form. At this time, the upper direction (e.g., the +Z-axis direction in FIG. 2) and the front-back direction (e.g., the Y-axis direction in FIG. 2) of the case body 210 may be opened. However, the shape and/or structure of the case body 210 are not limited by the above embodiment, and may be designed in various ways.

According to an embodiment, the case body 210 may be provided to allow a plurality of battery cells 110 to be inserted therein along one direction. For example, a plurality of battery cells 110 may be inserted therein along the front-back direction (e.g., the Y-axis direction in FIG. 2). That is, the case body 210 may be configured such that a plurality of battery cells 110 may be inserted therein in a sliding manner.

According to an embodiment, the module case 200 may further include a top plate 220. The top plate 220 may be provided to form one surface facing the upper direction of the module case 200 (e.g., the +Z-axis direction in FIG. 2). When the case body 210 is provided as a U-frame, the top plate 220 may be coupled in the open upper direction of the case body 210 (e.g., the +Z-axis direction in FIG. 2). The top plate 220 may be coupled to the case body 210 by welding each other. At this time, the coupled shape of the top plate 220 and the case body 210 may be a rectangular tubular shape that is open in the front-back direction (e.g., the Y-axis direction in FIG. 2). However, the top plate 220 may be omitted as necessary. For example, the module case 200 may be provided in an open state in the upper direction (e.g., the +Z-axis direction in FIG. 2).

Meanwhile, the module case 200 may include an end plate 230 provided in the open front-back direction (e.g., the Y-axis direction in FIG. 2) of the case body 210. The end plate 230 may be coupled to the case body 210 by welding. Meanwhile, although not illustrated for convenience, the end plate 230 may be made of, for example, an insulating material on the inside and a metal material on the outside. Additionally, the end plate 230 may be partially provided with holes or slits for exposing components that need to be exposed to the outside, such as the positive electrode terminal and negative electrode terminal of the battery module 10 or connectors.

In addition, the module case 200 may be formed in various other shapes. For example, at least one of the components of the module case 200 (e.g., the top plate 220) may be omitted, or one or more other components may be added. For example, the module case 200 may be provided with a box-shaped lower case having an upper open end and an upper cover that closes the upper open end of the lower case. At this time, the lower case may be provided in a form in which, for example, a left plate and a right plate covering both side surfaces of the cell stack 100 and a front plate and a back plate covering the front and back surfaces of the cell stack 100 are all integrated.

Alternatively, the module case 200 may be provided as a mono frame. For example, the case body 210 may be configured in a rectangular tubular shape that has an upper surface, a lower surface, a left surface, and a right surface, and has open front and back surfaces. According to the module case 200 including this mono frame, the battery module 10 may be assembled by assembling the cell stack 100 and a busbar frame assembly 400 and inserting them into the mono frame along the longitudinal direction (e.g., the Y-axis direction in FIG. 2), and then coupling the end plates 230 to open both ends of the mono frame. At this time, in order to prevent the cell stack 100 from moving within the module case 200, there may be almost no gap between the lower surface of the case body 210 and the top plate 220 and the plurality of battery cells 110, and there may also be almost no gap between both side surfaces of the case body 210 and both side portions of the plurality of battery cells 110.

Meanwhile, referring to FIG. 2, the battery module 10 of the present disclosure may further include a busbar frame assembly 400. The busbar frame assembly 400 may be provided inside the module case 200 and configured to cover at least one side of the cell stack 100. In the present embodiment, as illustrated in FIG. 2, the busbar frame assembly 400 may be coupled to the front direction and/or the back direction of the cell stack 100 (e.g., the -Y-axis direction and/or the +Y-axis direction in FIG. 2).

The busbar frame assembly 400 may include a busbar frame 401 and a plurality of busbars 402. The busbar frame 401 may be provided to be coupled approximately to the front direction and/or the back direction of the cell stack 100 (e.g., the -Y-axis direction and/or the +Y-axis direction in FIG. 2). The busbar frame 401 may have slits through which the electrode leads 112 of the battery cells 110 may be withdrawn in the front direction and/or the back direction (e.g., the -Y-axis direction and/or the +Y-axis direction in FIG. 2). Additionally, the busbar frame 401 may be made of a material having electrical insulation, such as a plastic material, and may be configured to attach busbars 402 to an outer surface thereof.

Additionally, the busbar frame 401 may be coupled to the cell stack 100 as the electrode leads 112 are coupled to the busbars 402 to be described below.

Meanwhile, the plurality of busbars 402 are means for connecting the plurality of battery cells 110 in series and/or in parallel, and may be made of a metal material such as copper, aluminum, or nickel, and may be provided in the form of a rod. The electrode leads 112 of the plurality of battery cells 110 may pass through the slits of the busbar frame 401 to be withdrawn outward from the busbar frame 401, and the portions withdrawn in this manner may be attached to the surface of the busbar 402 by welding or the like. When the electrode leads 112 of the battery cells 110 and the busbars 402 are welded in a predetermined pattern at the front and back of the cell stack 100, respectively, the plurality of battery cells 110 may be connected in series and/or in parallel.

In this embodiment, referring to FIG. 2, the module case 200 may have an internal space, thereby accommodating the cell stack 100 and the busbar frame assembly 400 and protecting the cell stack 100 from the outside.

The battery module 10 according to an embodiment of the present disclosure may further include a top cover 300. The top cover 300 may be configured to guide gas and/or discharged matter generated from the battery cell 110 to the outside of the battery module 10 and protect the cell stack 100 from external gas and/or discharged matter.

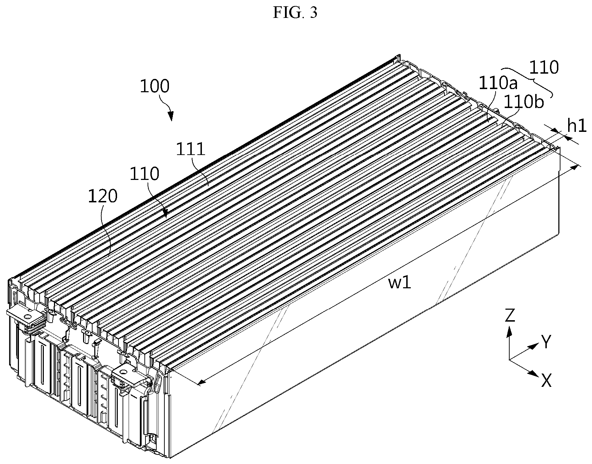

According to an embodiment, the top cover 300 may be disposed on top of the module case 200. According to an embodiment, the top cover 300 may be coupled to the upper portion of the module case 200. For example, the top cover 300 may be welded and coupled to the upper portion of the module case 200. For example, the top cover 300 may be provided to be bonded to the upper portion of the module case 200 by an adhesive member. For example, the adhesive member may include an adhesive, an adhesive tape, or the like. For example, the top cover 300 may be coupled to the top plate 220. For example, the top cover 300 may be welded and coupled to the top plate 220. For example, the top cover 300 may be attached to the top plate 220 by an adhesive member. For example, when one surface of the module case 200 in the upper direction is open, the top cover 300 may be directly coupled to the case body 210 of the module case 200. The top cover 300 may be attached to the case body 210 by an adhesive member. Meanwhile, the configuration and structure of the top cover 300 according to an embodiment of the present disclosure will be described in more detail with reference to FIGS. 3 to 6 below.

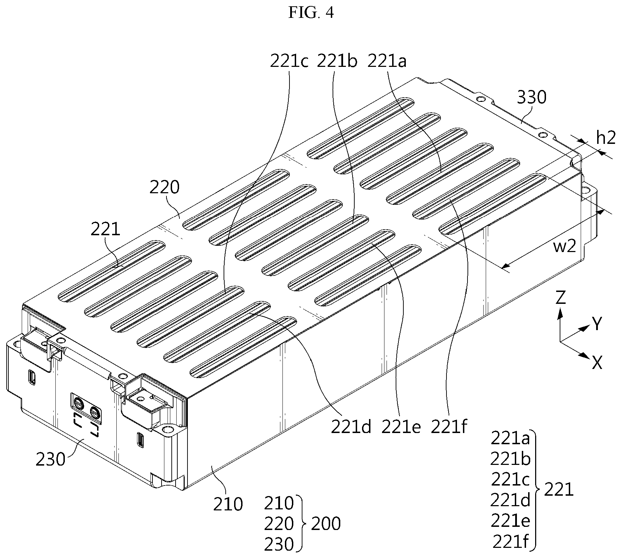

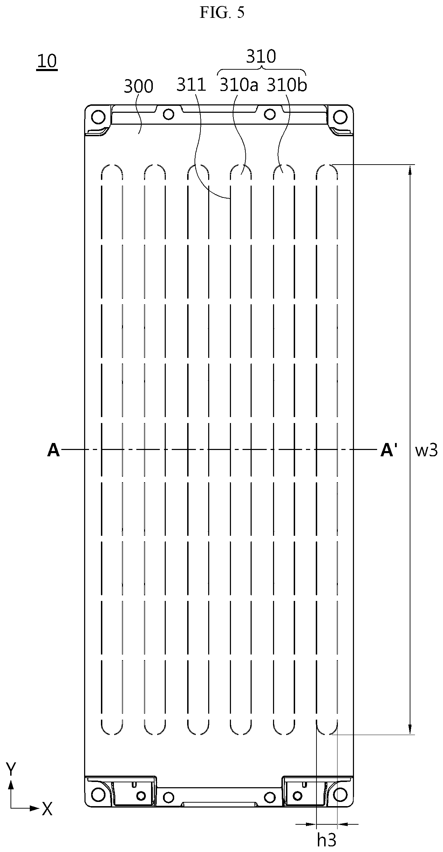

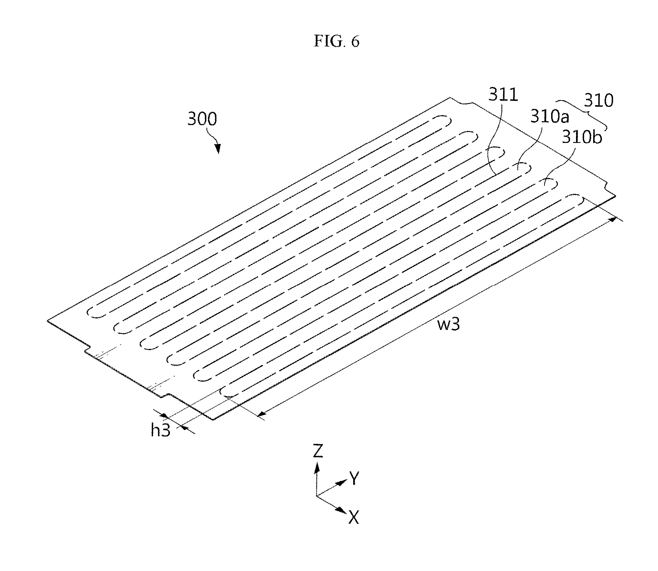

FIG. 3 is a perspective view of a cell stack according to an embodiment of the present disclosure. FIG. 4 is perspective view showing a battery module excluding a top cover according to an embodiment of the present disclosure. FIG. 5 is a plan view showing a top cover according to an embodiment of the present disclosure. FIG. 6 is a perspective view showing a top cover according to an embodiment of the present disclosure.

Referring to FIGS. 3 to 6, a battery module 10 according to an embodiment of the present disclosure may include a cell stack 100, a module case 200, and a top cover 300. The configuration of the cell stack 100, the module case 200, and the top cover 300 of FIGS. 3 to 6 may be the same as all or part of the configuration of the cell stack 100, the module case 200, and the top cover 300 of FIGS. 1 and 2. The embodiment of FIGS. 3 to 6 may be partially combined with the embodiment of FIGS. 1 and 2.

As illustrated in FIG. 3 and the like, the plurality of battery cells 110 may be disposed in parallel in a horizontal direction, for example, in the left-right direction (e.g., the X-axis direction in FIG. 3), while being erected in a vertical direction (e.g., the Z-axis direction in FIG. 3).

According to an embodiment, the plurality of battery cells 110 may include at least one first battery cell 110a and at least one second battery cell 110b disposed adjacent to the at least one first battery cell 110a. The at least one first battery cell 110a and the at least one second battery cell 110b may be defined as one battery cell 110 or as a plurality of battery cells 110.

The length of the at least one first battery cell 110a and/or the at least one second battery cell 110b in the front-back direction (e.g., the Y-axis direction in FIG. 3) may be a first length w1. The height of the at least one first battery cell 110a and/or the at least one second battery cell 110b in the left-right direction (e.g., the X-axis direction in FIG. 3) may be a first height h1.

As illustrated in FIG. 4 and the like, at least one venting hole 221 may be formed in the top plate 220. The at least one venting hole 221 may be configured to discharge venting gas generated from the battery cell 110 to the outside of the module case 200. For example, as illustrated in FIG. 4, at least one venting hole 221 may be formed in the top plate 220, and directional venting in the upper direction (e.g., the +Z-axis direction in FIG. 4) of the battery module 10 may be induced through the at least one venting hole 221.

According to the above embodiment of the present disclosure, when thermal runaway occurs in one of the plurality of battery cells 110 to generate gas or the like, the gas or the like may be quickly directed in a specific direction of the module case 200 by directional venting. For example, when thermal runaway occurs in one battery cell 110 to generate gas or the like, directional venting may be induced in the upper direction (e.g., the +Z-axis direction in FIG. 4) where the top plate 220 in which at least one venting hole 221 is formed is disposed.

As such, at least one venting hole 221 provided in the top plate 220 may be provided to discharge gas or flame generated inside the battery module 10 to the outside of the battery module 10 in the event of thermal runaway of the battery module 10. The remaining portion of the module case 200 excluding at least one venting hole 221 is closed, and the gas or flame may be discharged in a straight line toward at least one venting hole 221.

According to an embodiment, at least one venting hole 221 may be provided in plurality, and may be arranged with each other at regular intervals in the horizontal direction (e.g., the X-axis direction and/or the Y-axis direction in FIG. 2). According to an embodiment, the at least one venting hole 221 may include a first venting hole 221a, and a second venting hole 221b disposed side by side with the first venting hole 221a. For example, referring to FIG. 4, the at least one venting hole 221 may include a first venting hole 221a, a second venting hole 221b disposed to be spaced apart from the first venting hole 221a in the longitudinal direction (e.g., the Y-axis direction in FIG. 4), and a third venting hole 221c disposed to be spaced apart from the second venting hole 221b in the longitudinal direction (e.g., the Y-axis direction in FIG. 4). For example, at least one venting hole 221 may further include a fourth venting hole 221d disposed to be spaced apart from the third venting hole 221c in the left-right direction (e.g., the X-axis direction in FIG. 4), a fifth venting hole 221e disposed to be spaced apart from the fourth venting hole 221d in the longitudinal direction (e.g., the Y-axis direction in FIG. 4), and a sixth venting hole 221f disposed to be spaced apart from the fifth venting hole 221e in the longitudinal direction (e.g., the Y-axis direction in FIG. 4).

According to an embodiment, the size of the at least one venting hole 221 may be substantially constant. The length of the at least one venting hole 221 in the longitudinal direction (e.g., the Y-axis direction in FIG. 4) may be a second length w2. The height of the at least one venting hole 221 in the left-right direction (e.g., the X-axis direction in FIG. 4) may be a second height h2. According to an embodiment, the venting hole 221 corresponding to at least one battery cell 110 may be configured in plurality. The second length w2 of the at least one venting hole 221 may be shorter than the first length w1 of the at least one first battery cell 110a. For example, the venting hole 221 facing the at least one first battery cell 110a may be a first venting hole 221a, a second venting hole 221b, and a third venting hole 221c. According to an embodiment of the present disclosure, the top plate 220 may be configured such that a plurality of venting holes 221 are formed in the longitudinal direction (e.g., the Y-axis direction in FIG. 4), and one surface of the top plate 220 having rigidity may be disposed between the plurality of venting holes 221 to maintain rigidity for accommodating and/or protecting the battery cell 110.

As illustrated in FIG. 5 and the like, the top cover 300 may include a plurality of venting areas 310. The plurality of venting areas 310 formed in the top cover 300 may be configured to discharge venting gas generated from the battery cell 110 to the outside of the module case 200. For example, as illustrated in FIG. 5, a plurality of venting areas 310 are formed in the top cover 300, and directional venting in the upper direction (e.g., the +Z-axis direction in FIG. 5) of the battery module 10 may be induced through the plurality of venting areas 310.

According to the above embodiment of the present disclosure, when thermal runaway occurs in one of the plurality of battery cells 110 to generate gas or the like, the plurality of venting areas 310 may allow the vented gas or the like to be quickly discharged to the outside of the battery module 10.

According to an embodiment, the plurality of venting areas 310 may be disposed side by side along one direction, that is, a direction in which the battery cells 110 are stacked (e.g., the X-axis direction in FIG. 5). As illustrated in FIGS. 3, 5 and the like, the plurality of venting areas 310 may include a first venting area 310a formed at a position corresponding to the at least one first battery cell 110a, and a second venting area 310b formed at a position corresponding to the at least one second battery cell 110b.

According to an embodiment, each venting area 310 constituting the plurality of venting areas 310 may be configured to cover one surface facing the upper direction of each battery cell 110 constituting the plurality of battery cells 110. For example, the size and/or position of each venting area 310 may substantially correspond to the size and/or position of each battery cell 110. According to an embodiment, the length of the venting area 310 in the longitudinal direction (e.g., the Y-axis direction in FIG. 5) may be a third length w3. The height of the venting area 310 in the left-right direction (e.g., the X-axis direction in FIG. 5) may be a third height h3. For example, the third length w3 of the venting area 310 may be substantially the same as or similar to the first length w1 of at least one first battery cell 110a. For example, the third height h3 of the venting area 310 may be substantially the same as or similar to the first height h1 of at least one first battery cell 110a.

According to an embodiment, the size of the venting area 310 formed in the top cover 300 corresponds to the size of at least one battery cell 110, so that when gas and/or discharged matter is discharged from a specific battery cell 110, the venting area 310 covering the corresponding battery cell 110 may be opened to discharge the gas or flame quickly and smoothly.

According to an embodiment, as illustrated in FIGS. 4, 5, and the like, the venting hole 221 corresponding to one venting area 310 may be configured in plurality. In other words, the size of one venting area 310 may be larger than the size of at least one venting hole 221. For example, the third length w3 of one venting area 310 may be longer than the second length w2 of at least one venting hole 221. For example, the venting hole 221 facing the first venting area 310a may be a first venting hole 221a, a second venting hole 221b, and a third venting hole 221c. For example, the venting hole 221 facing the second venting area 310b may be a fourth venting hole 221d, a fifth venting hole 221e, and a sixth venting hole 221f. That is, the first venting area 310a may be formed at a position corresponding to the first venting hole 221a, the second venting hole 221b, and the third venting hole 221c, and the second venting area 310b may be formed at a position corresponding to the fourth venting hole 221d, the fifth venting hole 221e, and the sixth venting hole 221f.

According to an embodiment, the top cover 300 is configured to form the third length w3 of the venting area 310 to be longer than the second length w2 of at least one venting hole 221, so that when gas and/or discharged matter is discharged from the battery cell 110, the battery gas or flame may be discharged more quickly and smoothly.

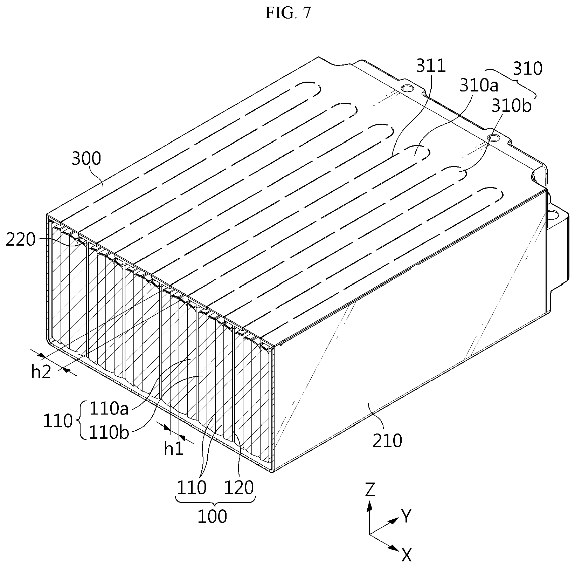

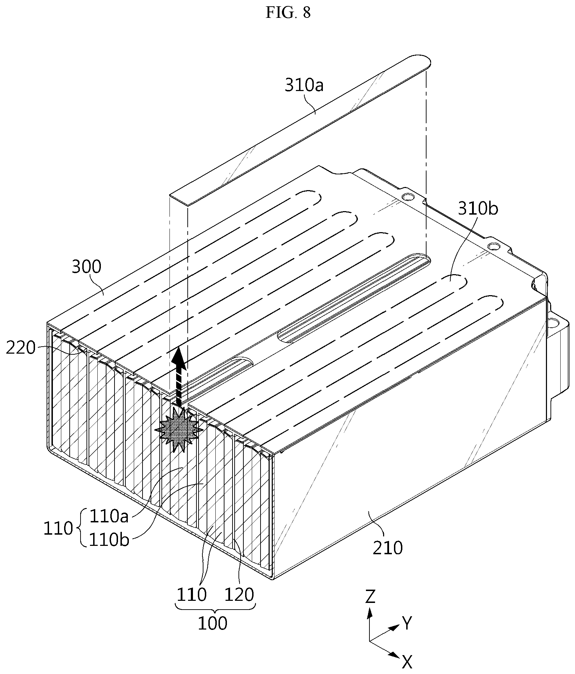

FIG. 7 is a cross-sectional perspective view of a battery module according to an embodiment of the present disclosure. FIG. 8 is a view for describing a top cover 300 where at least one venting area 310 is separated in the event of thermal runaway of a battery module according to an embodiment of the present disclosure.

Referring to FIGS. 7 and 8, a battery module 10 according to an embodiment of the present disclosure may include a cell stack 100, a module case 200, and a top cover 300. The configuration of the cell stack 100, the module case 200, and the top cover 300 of FIGS. 7 and 8 may be the same as all or part of the configuration of the cell stack 100, the module case 200, and the top cover 300 of FIGS. 3 to 6. The embodiment of FIGS. 7 and 8 may be partially combined with the embodiment of FIGS. 3 to 6.

According to an embodiment, at least a portion of the top cover 300 that is separated from the module case 200 during a thermal event may be provided at a pre-planned local part, such as a hole shape, preferably at a position corresponding to the upper portion of at least one venting hole 221. That is, at least one venting area 310 corresponding to the upper portion of at least one venting hole 221 of the top cover 300 may be configured to be separated from the module case 200 by venting gas or flame discharged from the battery cell 110. For example, when thermal runaway occurs within the battery module 10, at least a portion of the top cover 300 may be separated from the top cover 300 by the pressure of the gas discharged from the battery cell 110 and/or high heat such as dust or flame. For example, when thermal runaway occurs within the battery module 10, the adhesive member between the module case 200 and the top cover 300 may melt due to the pressure of the gas discharged from the battery cell 110 and/or high heat such as dust or flame, thereby reducing the adhesive strength between the module case 200 and the top cover 300. The discharge pressure of the venting gas discharged with straightness through at least one venting hole 221 may act on the top cover 300 to push a portion of the top cover 300 in the discharge direction of the venting gas, thereby separating it from another portion of the top cover 300.

In other words, in a normal state, the top cover 300 may close and/or shield at least one venting hole 221 of the top plate 220 of the module case 200 to protect the cell stack 100 inside the module case 200. However, during a thermal event in which venting gas or flame is generated in some battery cells 110, at least some of the plurality of venting areas 310 of the top cover 300 are separated and/or opened from the top cover 300, so that venting gas or flame discharged with straightness through at least one venting hole 221 of the top plate 220 may be discharged smoothly to the outside of the battery module 10 without interfering with the path thereof.

According to the above embodiment of the present disclosure, some of the plurality of venting areas 310 of the top cover 300 may be completely separated from the top cover 300, and thus as at least one venting hole 221 of the top plate 220 is exposed to the outside of the battery module 10, gas, flame, or the like may be completely discharged to the outside of the battery module 10 as a result of not shielding the at least one venting hole 221.

According to an embodiment, during a thermal event in which venting gas or flame is generated in a specific battery cell 110, a venting area 310 corresponding to the specific battery cell 110 among the plurality of venting areas 310 of the top cover 300 may be separated and/or opened from the top cover 300. For example, when venting gas is discharged from at least one first battery cell 110a, the first venting area 310a may be configured to be opened. For example, when venting gas is discharged from at least one first battery cell 110a, the second venting area 310b may not be opened and may remain closed.

Additionally, the top cover 300 may prevent gas or flame discharged to the outside from flowing back into the battery module 10. If the venting area 310 corresponding to the battery cell 110 where the venting gas is discharged among the plurality of venting areas 310 remains without being separated from the top cover 300 while the adhesive strength of the adhesive member is weakened, not only will the discharge of the venting gas or flame be interrupted, but there will also be a risk that the venting gas or flame will penetrate into the raised interface between the top cover 300 and the module case 200 and flow back into the battery module 10. However, according to the above embodiment of the present disclosure, the portion of the top cover 300 with the weakened adhesive strength is separated from the top cover 300 and has no effect on the venting gas or flame, so that the gas or flame discharged to the outside may be fundamentally blocked from flowing back into the battery module 10.

The plurality of venting areas 310 remaining without being separated from the top cover 300 may block not only heat but also high-temperature gas, flame, discharged matter, and the like generated from the battery cell 110. To this end, the top cover 300 may be provided with a material having excellent heat resistance and/or fire resistance, for example, a pad combining mica or a fire resistant barrier (FRB) and silicon. The FRB may include an inorganic material that is easy to convert, and may be made of a material having very high flame retardancy and ignition resistance. Therefore, when provided with a pad combining FRB and silicon, the top cover 300 may not shrink and maintain its morphological stability even when high-temperature heat is generated, thereby stably blocking high-temperature gas or flame generated from the battery cell 110.

Accordingly, according to the above embodiment of the present disclosure, in the event of thermal runaway of the battery module 10, gas or flame generated inside the battery module 10 may be smoothly discharged to the outside of the battery module 10, and the discharged gas or flame may be prevented from flowing back into the battery module 10. Therefore, the propagation of thermal runaway may be effectively prevented or delayed by minimizing thermal propagation to the neighboring battery modules 10, so that the safety and reliability of the battery module 10 may be ensured.

Referring to FIGS. 7 and 8, the plurality of venting areas 310 may be configured to be separable from the top plate 220 by the pressure of the venting gas discharged from the battery cell 110. Specifically, when gas is discharged from at least one venting hole 221 corresponding to the plurality of venting areas 310, only the venting area 310 provided on the upper portion of the vented battery cell 110 may be provided to be broken in the top cover 300. To this end, a cutting groove may be formed along the shape of the venting area 310.

Additionally, the battery module 10 according to the present disclosure may proceed in the sequence of accommodating the cell stack 100 in the case body 210, welding the top plate 220 and the end plate 230 to the case body 210 to complete the appearance of the battery module 10, applying an adhesive member to the top plate 220, and assembling the top cover 300 thereon. In such a case, all portions of the top cover 300 excluding at least one venting hole 221 may be attached to the top plate 220 by the adhesive member. Specifically, since the plurality of venting areas 310 are not bonded to the top plate 220 by the adhesive member or have relatively weak adhesive strength, the venting area 310 may be provided to be easily broken by the pressure of the venting gas.

Accordingly, according to the above embodiment of the present disclosure, when a thermal event occurs, gas or flame generated within the battery module 10 may be discharged to the outside of the module case 200 through the separated venting area 310. Additionally, at the same time, the remaining venting area 310 remains coupled to the top plate 220, which may prevent the discharged gas from flowing back into the module case 200.

According to an embodiment, the top cover 300 may include a cutting line 311. The cutting line 311 may be provided along the plurality of venting areas 310. The cutting line 311 may be configured to be more easily broken than the surrounding area as it is thinner or has a lower density than the surrounding area of the top cover 300. The cutting line 311 may be provided as a broken line or a solid line by forming a groove along the plurality of venting areas 310 of the top cover 300. The cutting line 311 may be provided so that it is provided to be weaker than the adjacent area and may be easily broken when the adhesive strength between the top cover 300 and the top plate 220 is weakened. As the cutting lines 311 are provided, the plurality of venting areas 310 may each be broken by gas or flame discharged from any battery cell 110.

Specifically, referring to FIG. 8, when any battery cell 110 is vented, only the venting area 310 provided on the upper portion of the vented battery cell 110 may be separated from the top plate 220. Additionally, the remainder of the plurality of venting areas 310 excluding the separated venting area 310 may be provided to remain coupled to the top plate 220. For example, as illustrated in FIG. 8, when a flame is generated in at least one first battery cell 110a, the adhesive member of the first venting area 310a provided on the upper portion of at least one first battery cell 110a vented by the high heat of the flame melts, so that the adhesive strength between the first venting area 310a and the top plate 220 is weakened, and thus only the first venting area 310a positioned on the upper portion of at least one first battery cell 110a may be separated.

According to the above embodiment of the present disclosure, the flame existing inside the module case 200 may be efficiently vented by the separated partial venting area 310. Additionally, according to the above embodiment of the present disclosure, by separating only some of the venting areas 310, the gas or flame discharged through the separated venting area 310 may be prevented from flowing back into the module case 200 by the portion that still remains coupled to the top plate 220.

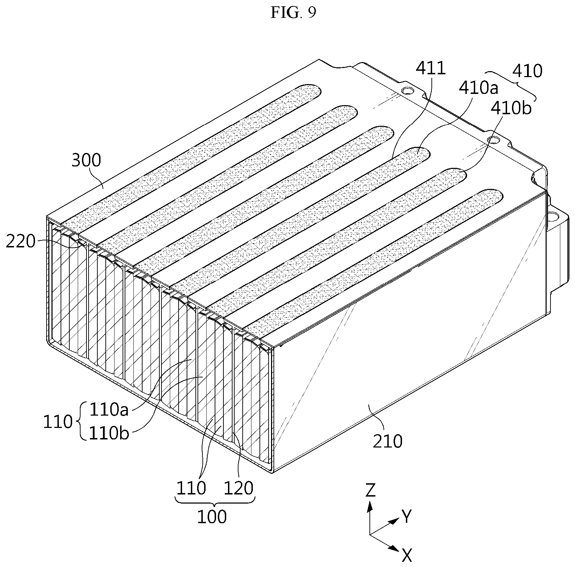

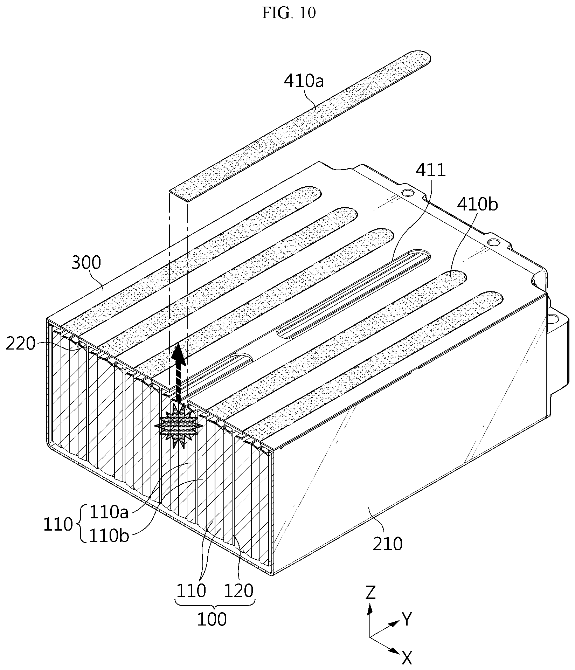

FIG. 9 is a cross-sectional perspective view of a battery module according to an embodiment of the present disclosure. FIG. 10 is a view for describing a top coverwhere at least one venting area is separated in the event of thermal runaway of a battery module according to an embodiment of the present disclosure.

Referring to FIGS. 9 and 10, a battery module 10 according to an embodiment of the present disclosure may include a cell stack 100, a module case 200, and a top cover 300. The configuration of the plurality of venting areas 410 of FIGS. 9 and 10 may be the same as all or part of the configuration of the plurality of venting areas 310 of FIGS. 7 and 8. The embodiment of FIGS. 9 and 10 may be partially combined with the embodiment of FIGS. 7 and 8.

According to an embodiment, during a thermal event, at least one venting area 410 corresponding to the upper portion of at least one venting hole 221 of the top cover 300 may be configured to be separated from the top cover 300 by venting gas or flame discharged from the battery cell 110.

According to an embodiment, the material of the plurality of venting areas 410 of the top cover 300 may be different from the material of the remaining areas excluding the plurality of venting areas 410 of the top cover 300. For example, the plurality of venting areas 410 may include a material having a relatively weak adhesive strength with the top plate, and the remaining areas excluding the plurality of venting areas 410 may include a material having a relatively strong adhesive strength with the top plate. For example, the plurality of venting areas 410 may include a material that melts at a certain level of heat and pressure or higher, and the remaining areas excluding the plurality of venting areas 410 may include a material that does not melt even at a certain level of heat and pressure or higher. For example, when thermal runaway occurs within the battery module 10, at least some of the plurality of venting areas 410 may melt due to the pressure of the gas discharged from the battery cell 110 and/or high heat such as dust or flame, thereby quickly discharge the venting gas or flame.

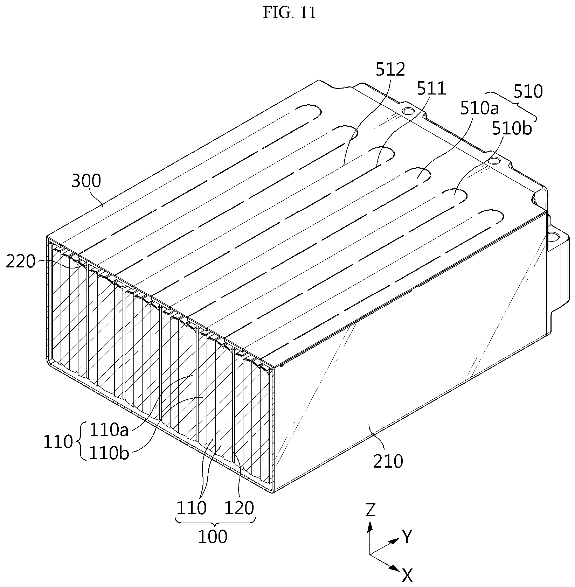

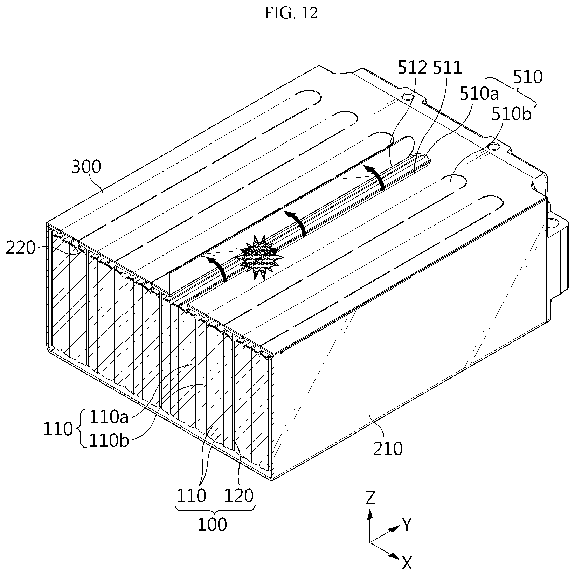

FIG. 11 is a cross-sectional perspective view of a battery module according to an embodiment of the present disclosure. FIG. 12 is a view for describing a top cover where at least one venting area is separated in the event of thermal runaway of a battery module according to an embodiment of the present disclosure.

Referring to FIGS. 11 and 12, a battery module 10 according to an embodiment of the present disclosure may include a cell stack 100, a module case 200, and a top cover 300. The configuration of the plurality of venting areas 510 of FIGS. 11 and 12 may be the same as all or part of the configuration of the plurality of venting areas 410 of FIGS. 9 and 10. The embodiment of FIGS. 11 and 12 may be partially combined with the embodiment of FIGS. 9 and 10.

According to an embodiment, when venting gas flows into the venting area 510 of the top cover 300 from the inside of the module case 200 during a thermal event, the venting area 510 may be opened. Accordingly, the gas discharged through the upper venting hole 221 of the battery cell 110 may be discharged to the outside of the battery module 10 through the open venting area 510 formed on the upper side of the corresponding venting hole 221. That is, according to this structure, high-temperature gas and flame inside the module may be discharged smoothly.

According to an embodiment, the plurality of venting areas 510 of the top cover 300 may include a bending portion 512 extending from a portion of the top cover 300, and a cutting portion 511 extending from the bending portion 512 and separated from the top cover 300. The cutting portion 511 may be configured to be more easily broken than the surrounding area as it is thinner or has a lower density than the surrounding area of the top cover 300. The cutting portion 511 may be provided as a broken line or a solid line by forming a groove along the plurality of venting areas 510 of the top cover 300. The cutting portion 511 is provided to be weaker than the adjacent area, so that it may be easily broken when the adhesive strength between the top cover 300 and the top plate 220 is weakened.

Referring to FIG. 12, the plurality of venting areas 510 are closed in a normal state, and when a thermal event occurs inside the battery module 10 to generate gas, they may be opened by the internal pressure of the battery module 10. At this time, the venting area 510 may be opened in a direction toward the outside of the battery module 10 as shown in FIG. 12. For example, when the pressure inside the battery module 10 increases due to gas generated inside the battery module 10, the cutting portion 511 of the venting area 510 illustrated in FIG. 12 may be broken to allow the venting area 510 to be opened toward the outside.

According to this structure, even if a thermal event occurs inside the battery module 10 to generate gas, the gas may be efficiently discharged to the outside of the battery module 10.

The venting area 510 may not be opened in a direction toward the inside of the battery module 10. Referring to FIG. 12, when a thermal event occurs outside the battery module 10 to generate gas, the top cover 300 may receive external pressure in a direction toward the inside of the battery module 10. Even in this case, the venting area 510 of the present disclosure may not be opened in a direction toward the inside of the battery module 10. That is, the venting area 510 may be configured to be opened only in a direction toward the outside of the battery module 10.

Therefore, according to this structure, even if a thermal event occurs in a battery module 10 adjacent to the battery module 10, the high-temperature gas and flame generated in the adjacent battery module 10 may be prevented from penetrating into the battery module 10. That is, according to this structure, the battery module 10 may be protected from high-temperature and high-pressure gas and flame generated from the battery module 10 where the thermal event occurred. Therefore, the occurrence of a chain of thermal runaway events between modules may be suppressed. As a result, by protecting the battery module 10 through the top cover 300, the chain reaction event may be controlled and the safety of the battery pack 1 may be ensured.

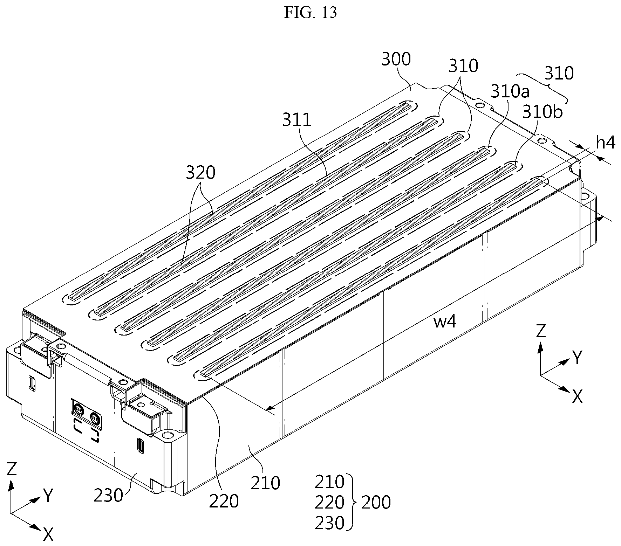

FIG. 13 is a perspective view of a battery module further including a support member 320 according to an embodiment of the present disclosure.

Referring to FIG. 13, a battery module 10 according to an embodiment of the present disclosure may include a cell stack 100, a module case 200, and a top cover 300. The configuration of the cell stack 100, the module case 200, and the top cover 300 of FIG. 13 may be the same as all or part of the configuration of the cell stack 100, the module case 200, and the top cover 300 of FIGS. 1 to 12. The embodiment of FIG. 13 may be partially combined with the embodiment of FIGS. 1 to 12.

According to an embodiment, the battery module 10 may further include a support member 320 positioned on the top cover 300 to supplement the rigidity of the top cover 300. When the top cover 300 is made of a flexible material, the support member 320 having relatively high rigidity may be attached onto a plurality of venting areas 310, thereby preventing the plurality of venting areas 310 from being bent or partially opened, rather than being opened at once.

Referring to FIG. 13, the support member 320 may be, for example, in the form of a rod that is elongated in the longitudinal direction along the plurality of venting areas 310. For example, the length of the support member 320 in the longitudinal direction (e.g., the Y-axis direction in FIG. 13) may be a fourth length w4. For example, the height of the support member 320 in the left-right direction (e.g., the X-axis direction in FIG. 13) may be a fourth height h4. The fourth length w4 and/or the fourth height h4 of the support member 320 may be substantially the same as or smaller than the third length w3 and/or the third height h3 of the plurality of venting areas 310.

According to an embodiment, by attaching the support member 320 onto the top cover 300, when gas and/or discharged matter is discharged from the battery cell 110, the entire area of the plurality of venting areas 310 may be opened at once so that the battery gas or flame may be discharged more quickly and smoothly.

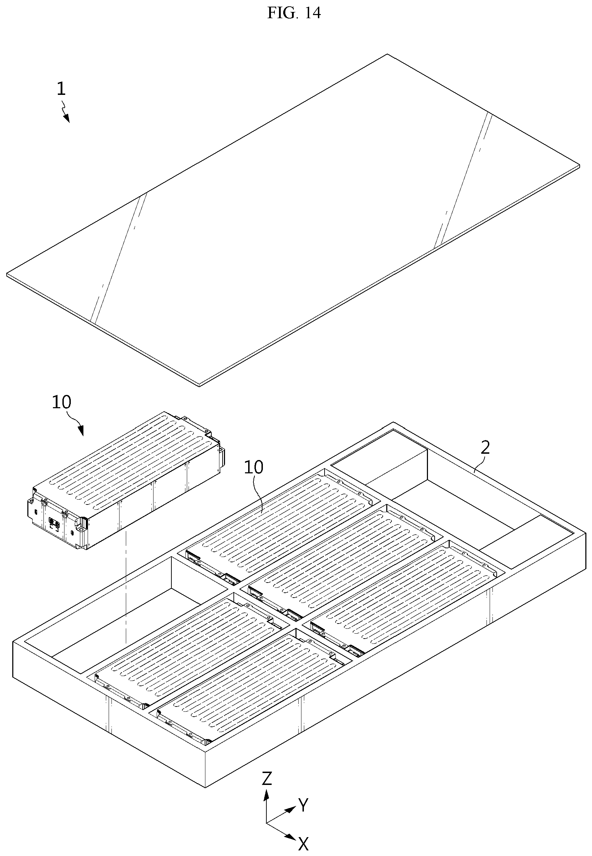

FIG. 14 is a schematic perspective view of a battery pack including a battery module according to an embodiment of the present disclosure.

Referring to FIG. 14, a battery pack 1 according to an embodiment of the present disclosure may include one or more battery modules 10 according to an embodiment of the present disclosure as described above. The battery pack 1 according to the present disclosure may further include a battery management system (BMS) for integrated control of charging and discharging of one or more battery modules, a current sensor, a fuse, and the like, and a pack case 2 for accommodating the above-described components.

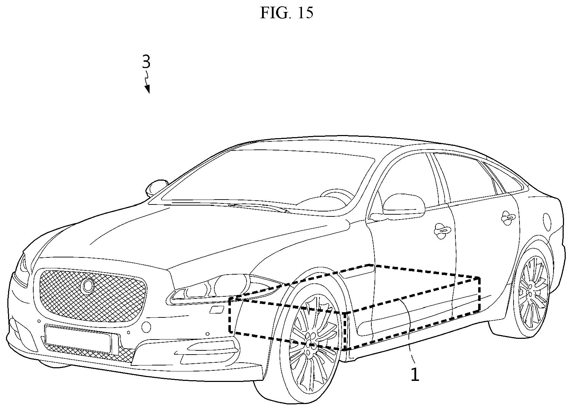

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to an embodiment of the present disclosure or one or more battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheeled vehicle and a two-wheeled vehicle. The vehicle 3 operates by receiving power from the battery pack 1 or the battery module 10 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery module comprising:
a cell stack comprising a plurality of battery cells;
a module case configured to accommodate the cell stack; and
a top cover disposed on top of the module case,
wherein the top cover comprises a plurality of venting areas configured to discharge venting gas.

2. The battery module according to claim 1,
wherein the plurality of battery cells are disposed in a horizontal direction, and
each venting area constituting the plurality of venting areas is configured to cover one surface facing the upper direction of each battery cell constituting the plurality of battery cells.

3. The battery module according to claim 1,
wherein the top cover is configured such that the plurality of venting areas are closed in a normal state, and at least some of the plurality of venting areas are opened when venting gas flows into the top cover from the inside of the module case.

4. The battery module according to claim 1,
wherein the plurality of battery cells comprise at least one first battery cell and at least one second battery cell disposed adjacent to the at least one first battery cell, and
the plurality of venting areas comprise a first venting area formed at a position corresponding to the at least one first battery cell and a second venting area formed at a position corresponding to the at least one second battery cell.

5. The battery module according to claim 4,
wherein when venting gas is discharged from the at least one first battery cell, only the first venting area is configured to be opened.

6. The battery module according to claim 1,
wherein the plurality of venting areas are configured to be opened only in a direction toward the outside of the battery module.

7. The battery module according to claim 1,
wherein the plurality of venting areas comprise cutting lines configured to allow each of the plurality of top cover areas to be breakable.

8. The battery module according to claim 1, further comprising:
at least one support member disposed on top of the plurality of venting areas.

9. The battery module according to claim 4,
wherein the module case comprises a top plate that forms one surface facing the upper direction of the module case and has at least one venting hole through which venting gas discharged from the battery cell is discharged.

10. The battery module according to claim 9,
wherein the size of the at least one venting hole is smaller than the size of one of the plurality of venting areas.

11. The battery module according to claim 9,
wherein the at least one venting hole comprises a first venting hole and a second venting hole disposed side by side with the first venting hole, and
the first venting hole and the second venting hole are formed at positions corresponding to at least a portion of the first venting area.

12. The battery module according to claim 9,
wherein the top cover is coupled to the top plate.

13. A battery pack comprising a battery module according to any one of claims 1 to 12.

14. A vehicle comprising a battery pack according to claim 13.
